# EUROPEAN PATENT SPECIFICATION

(11) **EP 0 692 442 B1**
(45) Date of publication and mention of the grant of the patent: **23.09.1998**
(21) Application number: 95830300.0
(22) Date of filing: 12.07.1995
(51) Int. Cl.: B65G 57/30, B65B 35/52

(54) **Stacking device for disk-like articles**
Stapelvorrichtung für scheibenförmige Gegenstände
Dispositif d'empilage pour articles en forme de disque

(30) Priority: 12.07.1994 IT BO940323
(43) Date of publication of application: 17.01.1996
(73) Proprietor: MARCHESINI GROUP S.p.A., I-40065 Pian di Macina Pianoro (Bologna) (IT)
(72) Inventor: Monti, Giuseppe, Pianoro, (Bologna) (IT)
(74) Representative: Dall'Olio, Giancarlo

(56) References cited:
- US-A- 3 712 487
- US-A- 4 108 319

## Description

The present invention relates to stacking disk-like articles, wrapped or not, having diameter in a range of 18 to 36 mm, and thickness in a range of 3 to 11 mm, according to the preamble of claim 1.

A known device for stacking articles of the above mentioned type, includes a pipe having a diameter little bigger than the diameter of the articles to be stacked, arranged vertically and featuring, in its lower part, stack support elastic means that allow to introduce, from the bottom upwards (by e.g. a suitable pusher), articles until a stack having a predetermined number of articles is formed.

Another device uses channels which are fed with articles, with outlets facing a conveyor situated below.

The conveyor has seats that sequentially receive articles from the channels, each of the seats thus forming a stack of articles.

This device allows to obtain stacks having a predetermined number of articles (for this purpose, it is enough to deactivate one or more channels), but from the other side it has functional disadvantages such as jamming of one of the channels by an article that embeds therein and blocks it, or in case of not wrapped articles, the powder that is produced and that brings about well known problems.

In the US-A-3.712.487 there is disclosed an apparatus for stacking substantially flat surface-like objects, particularly paper products, comprising at least one worm-like conveying element, driven to rotate about its longitudinal axis and extending between an infeed station and a delivery station for the objects.

According to an important aspect of the invention, the conveyor element is constructed as a spiral or screw surface travelling about a cylindrical hollow compartment.

The objects, such as newspapers, are fed to the worm conveyors at their base windings, lifted and then piled over the top windings of the worm conveyors while being kept among vertical bars and surfaces, that can be included in the empty core of the worm conveyors. Once the pile is formed the newspapers are removed from top of the pile. This operation can be performed manually, just raising a batch of newspapers and bringing them to a binder or something like that.

Removal can be also effected automatically by means of a mechanical device, since removing large objects like newspapers from a large store compartment does not require mechanisms particularly complex.

In the art of pharmaceuticals packaging, in particular disk-like objects such as tablets having small diameter, when the pile of articles is ready, removal operation becomes quite difficult and critic operation, because the worm conveyors are very close to each other, to give enough rest surface to the lowermost articles in the pile and avoid breakage thereof. Very small space is therefore left to any removal device.

The object of the present invention is to propose a device that allows to stack any number of disk-like articles, wrapped or not.

Another object of the invention is to propose a device that allows to pass from one stack to another, with a different number of articles, in a simple and quick way and without changing any parts of the device.

A further object is to propose a device that fulfils the above mentioned objects and does not damage the articles.

The above mentioned objects are obtained in accordance with the contents of claims.

The characteristic features of the present invention are pointed out in the following description with particular reference to a preferred, but not the only, embodiment of the proposed device, illustrated in the enclosed drawings, in which:
- figure 1 shows a lay-out of a machine, in which a device being the subject of the invention, is included;
- figure 2 shows a schematic, plane view of the device;
- figures 3a, 3b show the section III-III of figure 2 in two moments connected with the formation of a stack;
- figure 4 shows an enlarged view of the section IV-IV of figure 2.

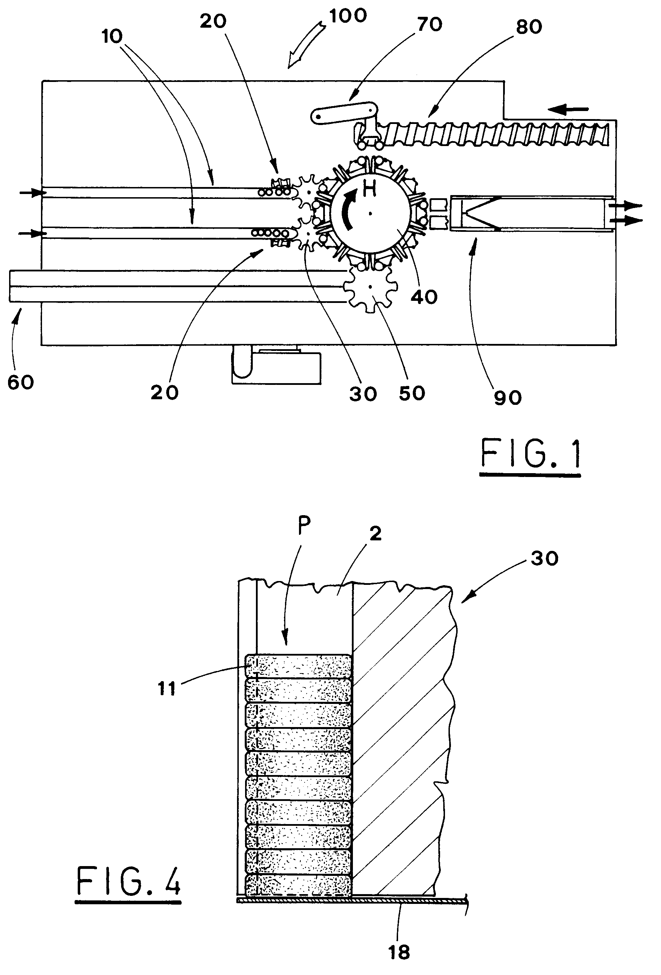

With reference to fig. 1, reference numeral 100 indicates a machine for packaging stacks of articles 11 in correspondent tube-like containers.

This machine includes, for instance, two lines 10 that feed the articles to devices 20, which are the subject of the present invention. The task of the devices 20 it to make stacks of articles.

The articles are fed, by correspondent first star wheels 30, in suitable time relation, to a carousel 40, that rotates in step in the direction H, in which the articles are packaged.

Upstream of the star wheels 30, a second star wheel 50 is connected to the carousel, and is aimed at feeding the tube containers thereto, in a known way.

The tube containers are supplied to the star wheel 50 by suitable tube containers feeding lines 60 (e.g. two).

Manipulators 70, of known type, are also connected to the carousel 40, downstream of the star wheels 30.

The manipulators 70 take plugs from a line 80 to close the tube containers already filled with the stacks of articles.

The so obtained packages are unloaded from the carousel 40 to a outlet line 90 that sends them toward suitable equipments, not shown.

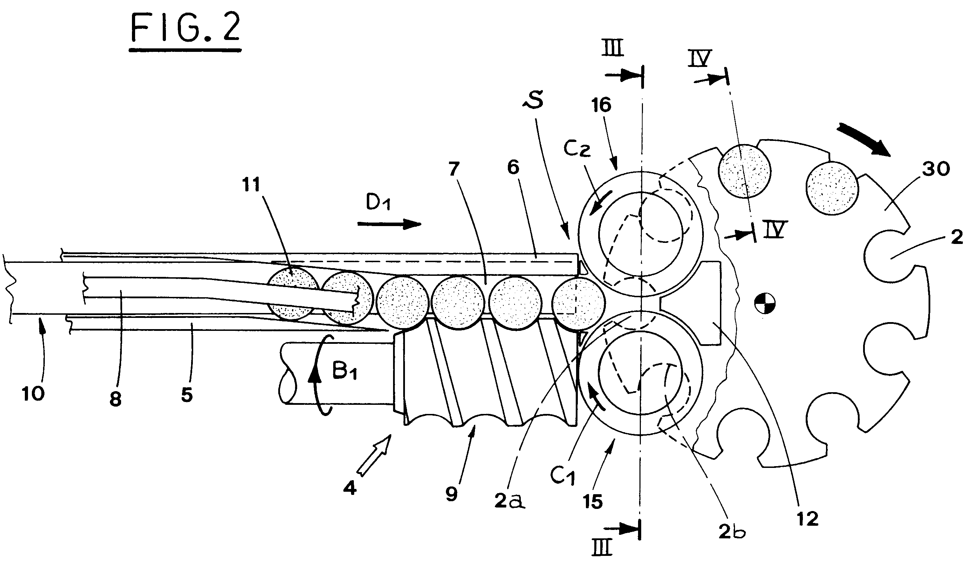

With reference to figs. 2 to 4, the proposed device 20 will be described in the following.

In the above mentioned figs. a working group, indicated by reference numeral 4, is aimed at singling out the articles 11 coming along the line 10.

The group 4 includes a conveying belt 7, the upper run of which moves in direction D₁, and an Archimedean screw 9, parallel to the direction D₁, and situated above a longitudinal edge of the terminal part of the upper arm of the conveying belt 7.

The Archimedean screw has a variable pitch, increasing from upstream to downstream, and the related thread has a circumferential arc-like profile with diameter that is not smaller than the articles 11 diameter.

Because of the rotation of the Archimedean screw in direction B₁, the threading of the same screw determines a longitudinal component in the same direction as D₁ and with a speed lower than the speed of the upper run of the conveyor belt 7.

Over the upper run of the conveyor belt 7, there are situated two side panels, respectively inner 5 and outer 6, orientated so as to send the articles toward the Archimedean screw.

The inner side panel ends at the beginning of the Archimedean screw, while the final part of the outer side panel extends alongside the same screw so as to act as a longitudinal stop for the articles moved by the conveyor belt and engaged by the Archimedean screw.

Over the conveyor belt 7, there is situated a stop 8 that prevents the articles from being lifted, so that after they have been fed to the belt 7 they keep in horizontal position.

Two identical worm screws, or Archimedean screws, 15,16, with axes parallel to each other, are connected to the terminal parts of the outer side panel 6 and of the Archimedean screw 9.

The worm screws 15,16, which are arranged vertical and perpendicular to the direction D₁, are rotated with the same speed in opposite counter-rotating directions C₁, C₂, in time relation with the Archimedean screw 9.

The distance between the worm screws 15,16 is such that they can receive, between the respective threads 15a, 15b, an article 11, without damaging it.

In order to avoid any article damage, the distance between the threads is basically equal to the diameter of the article 11, or more precisely, is just a little bigger than this diameter.

A vertical stop 12, as high as the screws 15, 16, functionally cooperating with the latters to lift the articles 11, is situated between the screws 15,16, slightly offset backwards with respect to the plane formed by the axes of the screws.

The screws 15,16 that define a working station S, are placed immediately below the star wheel 30, whose axis is parallel to the axes of the screws.

This wheel star has vertical seats 2 located regularly along the board thereof, and the circular sections of each seat is bigger than the circular section of an article 11. The axes of the seats are all equidistant from the centre of the star wheel.

The star wheel 30 is moved in step and is situated in such a way with respect to the screws 15, 16 that, in the working station S, the axis of a seat 2 is coaxial with the axis of an article 11 touching the stop 12.

The mechanism of the proposed device is immediately understood from the above description.

The articles 11, fed to the conveyor belt 7 in a known way, are singled out by the working group 4; thus, they arrive intermittently according to a predetermined frequency, at the outlet of the group 4, i.e. in correspondence with the initial part of the screws 15,16.

Each article 11 is engaged by the threads 15a,16a of the screws 15, 16, and is gradually lifted due to the screws rotation.

Because of the directions C₁, C₂ of the screws rotation the article is pushed toward the stop 12 that guides its vertical upward movement and determines its position.

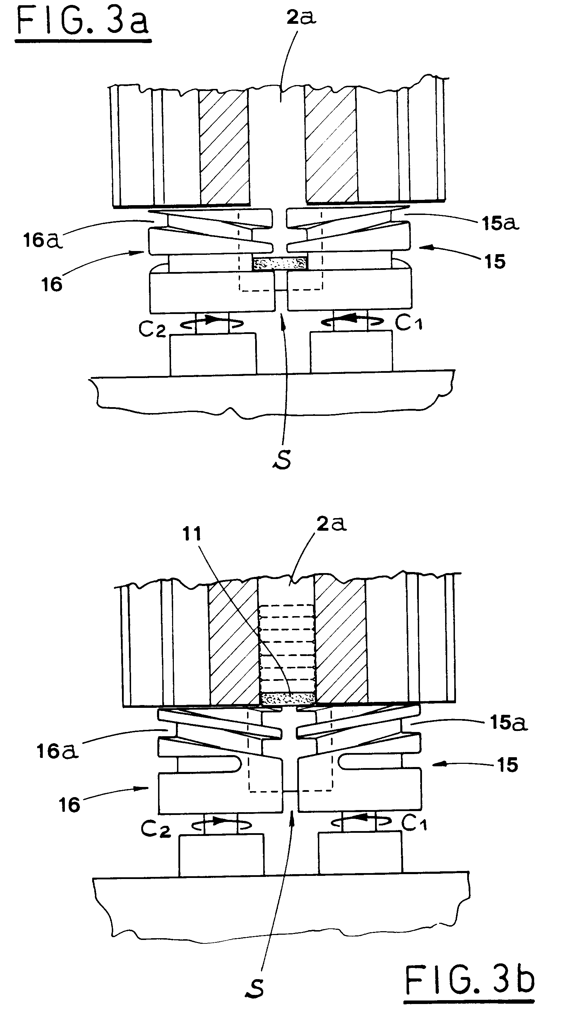

At the end of the upward movement, the article is placed in the seat 2a of the star wheel and supported, at the bottom, by the upper heads of the screws 15, 16 that are flat and perpendicular to the screws axes (see fig. 3a).

A second article, subsequent to the previous one, is lifted in the same way and positioned therebelow, touching it while laying in the seat 2a.

In this way, a stack P of articles 11 is gradually formed in the seat 2a (fig.3b).

The number of the articles in the stack is established by the operator in relation with the packaging needs (i.e. number of the articles to be introduced into a relative tube container, and is limited only by the height of the seat 2, since the article cannot protrude therefrom.

In order to establish the number of the articles, it is enough to use known means for counting the articles, placed e.g. in correspondence with the working group 4; the star wheel 30 movement is controlled by these means.

More precisely, after an established number of articles has been counted, the star wheel 30 is moved one step onward, so as to position the seat 2b, situated downstream of the seat 2a, in correspondence with the screws 15, 16.

In the above described working conditions, the stack P situated in the seat 2a is supported by a fixed disc 18.

It is to be pointed out that, during the singling out and subsequent upward movement, the articles are not subjected to stresses that could damage them in any way.

This feature of the device makes it particularly advantageous for both wrapped and not wrapped articles.

Moreover, the particular and original combination of a working group 4 for singling out the articles and a pair of screws 15, 16, functionally cooperating with a vertical stop 12, allows to obtain stacks P of any number of articles 11, without any damage to the same articles.

The resulting advantage is obvious, since in order to pass from one package to another with a different number of the articles of the same type, it is enough to act on the program which controls step motion of the star wheel 30, that is not difficult at all, because the parameter to be changed is directly related to counting.

## Claims

1. Stacking device for disk-like articles, including :
a star wheel (30) with a vertical axis, having, along its edge, circular vertical open-ended seats (2) which are equidistant from the star wheel centre and angularly equally spaced apart, and which have the diameter not smaller than the diameter of the articles, the said star wheel being moved in step so as to locate intermittently each one of the said circular seats (2) at a working station (S) ;
a preceding working group (4) for feeding the articles (11), said working group (4) having an outlet
the said stacking device being characterised in that :
it has two worm screws (15,16), with vertical axes, rotating in opposite directions (C₁,C₂), so that when they receive, between their threads (15a,16a), each article coming from the outlet of said working group (4) they lift it gradually maintaining its horizontal position;
a vertical stop (15) for guiding and positioning the articles situated on the side of and partially between the screws opposite to the said working group (4);
said working group (4) is situated at one side of said worm screws (15,16) with the outlet located at the lower ends of said worm screws and star wheel (30), the articles being kept in horizontal position and singled out at the outlet.
said worm screws (15,16) are located under the star wheel in the region of a seat each time positioned in said working station (S), so that each article (11), when raised, is introduced in the above vertical seat (2) of the star wheel (30) ;
the said seat is at least partially closed by the upper heads of the screws thus supporting the above articles (11) that are introduced intermittently in the seat by the screws, until a stack (P), with a predetermined number of articles (11), is formed.

2. Device according to claim 1, characterised in that the working group (4) includes:
a belt (7), whose upper horizontal run is movable toward the screws (15,16) and extends thereto, the said belt being fed at the upstream end with articles to be packaged;
an Archimedean screw (9), situated over a longitudinal edge of the final part of the said upper run, with circumferentially profiled thread having diameter bigger than the diameter of the articles and variable step, from top downwards, so as to singling out gradually, in cooperation with an opposite vertical side panel (6), the articles engaged thereby.

3. Device according to claim 1, characterised in that the said worm screws (15,16) are identical to each other.

4. Device according to claim 1, characterised in that the initial parts of the screws (15,16) are located in correspondence with the upper run of the conveyor belt (7).

5. Device according to claim 1, characterised in that the said vertical stop (15) is as high as the screws and is positioned at the same level.

## Patentansprüche

1. Stapeleinrichtung für scheibenförmige Produkte, die umfaßt:
ein Sternenrad (30) mit einer vertikalen Achse, das entlang seiner Flanke kreisbogenförmige, vertikal offen begrenzte Aufnahmen (2) aufweist, welche gleich beabstandet zu einem Zentrum des Sternenrades angeordnet und in Umfangsrichtung gleichmäßig voneinander beabstandet sind, und welche einen Durchmesser aufweisen, der nicht geringer als der Durchmesser der Produkte ist, wobei das Sternenrad schrittförmig bewegt wird, um aufeinanderfolgend jede der kreisbogenförmigen Aufnahmen (2) im Bereich einer Arbeitsstation (S) zu positionieren;
eine vorausgehende Arbeitsgruppe (4) zum Transport der Produkte (11), wobei die Arbeitsgruppe (4) einen Ausgang aufweist;
die Stapelvorrichtung ist dadurch charakterisiert, daß:
sie zwei Schneckenschrauben (15, 16) mit vertikalen Achsen aufweist, die in entgegengesetzte Richtungen (C 1, C 2) rotieren, so daß die Schneckenschrauben bei einer Aufnahme jeden Produktes, das vom Ausgang der Arbeitsgruppe (4) kommt, zwischen ihre Gewinde (15 a, 16 a), die Produkte bei im wesentlichen Beibehaltung deren horizontaler Positionierung anheben;
ein vertikaler Anhalter (15) zur Führung und Positionierung der Produkte im Bereich einer Seite und bereichsweise zwischen den Schrauben gegenüberliegend zur Arbeitsgruppe (4) angeordnet ist;
die Arbeitsgruppe (4) im Bereich einer Seite der schneckenförmigen Schrauben (15, 16) derart angeordnet ist, daß der Ausgang im Bereich der unteren Enden der schneckenförmigen Schrauben und des Sternrades (30) angeordnet ist, wobei die Produkte in einer horizontalen Positionierung und vereinzelt den Ausgang verlassen;
die schneckenförmigen Schrauben (15, 16) unter dem Sternenrad im Bereich einer Aufnahme jedesmal innerhalb der Arbeitsstation (S) positioniert sind, so daß jedes Produkt (11), wenn dieses angehoben wird, in die obere vertikale Aufnahme (2) des Sternenrades (30) eingeführt wird;
die Aufnahme mindestens bereichsweise von den oberen Köpfen der Schrauben verschlossen ist, wobei diese die oberen Produkte (11) tragen, die aufeinander folgend von den Schrauben in die Aufnahmen eingeführt werden, und zwar solange, bis ein Stapel (P) mit einer vorgebbaren Anzahl von Produkten (11) ausgebildet ist.

2. Vorrichtung nach Anspruch 1, dadurch gekennzeichnet, daß die Arbeitsgruppe (4) umfaßt:
ein Band (7), dessen oberer horizontaler Lauf beweglich in Richtung auf die Schrauben (15, 16) angeordnet ist und sich in Richtung auf diese erstreckt, wobei das Band im Bereich seines der Strömungsrichtung entgegenliegenden Endes mit den zu verpackenden Produkten bestückt wird;
eine archimedische Schraube (9), die oberhalb einer longitudinalen Flanke des Endbereiches des unteren Laufes angeordnet ist, wobei diese ein kreisbogenförmig profiliertes Gewinde aufweist, das mit einem Durchmesser versehen ist, der größer als der Durchmesser der Produkte dimensioniert ist, und bei der eine variable Schritteilung vom Eingabebereich in Strömungsrichtung abwärts vorgesehen ist, um allmählich eine Vereinzelung der eingelegten Artikel in Zusammenwirkung mit einer gegenüberliegenden vertikalen Seitenwand (16) durchzuführen.

3. Vorrichtung nach Anspruch 1, dadurch gekennzeichnet, daß die schneckenförmigen Schrauben (15, 16) zueinander identisch ausgebildet sind.

4. Vorrichtung nach Anspruch 1, dadurch gekennzeichnet, daß die Anfangsbereiche der Schrauben (15, 16) in Zusammenwirkung mit dem oberen Lauf des Förderbandes (7) angeordnet sind.

5. Vorrichtung nach Anspruch 1, dadurch gekennzeichnet, daß der vertikale Anhalter (15) so hoch wie die Schrauben ausgebildet ist und daß dieser auf einem gleichen Niveau angeordnet ist.

## Revendications

1. Dispositif d'empilage d'articles en forme de disque, comprenant :
une roue (30) en étoile présentant un axe vertical, ayant, le long de son pourtour, des logements (2) à extrémité ouverte verticaux et circulaires qui sont équidistants du centre de la roue en étoile et espacés angulairement régulièrement, et qui ont un diamètre pas plus petit que le diamètre des articles, ladite roue en étoile étant actionnée par pas afin de disposer périodiquement chacun desdits logements (2) circulaires à une station (S) de travail ;
un groupe de travail (4) précédent pour amener les articles (11), ledit groupe de travail (4) ayant une sortie,
ledit dispositif d'empilage étant caractérisé en ce que :
il a deux vis sans fin (15, 16) présentant des axes verticaux, tournant dans des sens (C₁, C₂) opposés, de sorte que quand ils reçoivent, entre leurs filets (15a, 16a), chaque article venant de la sortie dudit groupe de travail (4), ils les élèvent graduellement en maintenant leur position horizontale ;
une butée (12) verticale pour le guidage et le positionnement des articles située sur le côté de et partiellement entre les vis à l'opposé dudit groupe de travail (4) ;
ledit groupe de travail (4) est situé d'un côté desdites vis sans fin (15, 16) avec sa sortie située aux extrémités inférieures desdites vis sans fin et roue (30) en étoile, les articles étant maintenus en position horizontale et séparés à la sortie ;
- lesdites vis sans fin (15, 16) sont situées sous la roue en étoile dans la région d'un logement chaque fois positionné dans ladite station (S) de travail, de sorte que chaque article (11), quand il est soulevé, est introduit dans le logement (2) vertical de la roue (30) en étoile qui est au-dessus ;
ledit siège est au moins partiellement fermé par les têtes supérieures des vis supportant ainsi les articles (11) au-dessus qui sont introduits périodiquement dans le logement par les vis, jusqu'à ce qu'une pile (P) présentant un nombre prédéterminé d'articles (11) soit formée.

2. Dispositif selon la revendication 1, caractérisé en ce que le groupe de travail (4) comprend :
une bande (7), dont le brin horizontal supérieur est mobile vers les vis (15, 16) et s'étend vers elles, ladite bande étant alimentée à l'extrémité amont en articles à grouper,
une vis d'Archimède (9) située sur un bord longitudinal de la partie terminale dudit brin supérieur, avec un filet profilé circonférentiellement ayant un diamètre plus grand que le diamètre des articles et un pas variable, depuis le sommet vers le bas, afin de séparer graduellement, en coopération avec un panneau latéral (6) vertical opposé, les articles en relation d'engagement avec elle.

3. Dispositif selon la revendication 1, caractérisé en ce que lesdites vis sans fin (15, 16) sont identiques.

4. Dispositif selon la revendication 1, caractérisé en ce que les parties initiales des vis (15, 16) sont disposés en correspondance avec le brin supérieur de la bande (7) de convoyeur.

5. Dispositif selon la revendication 1, caractérisé en ce que ladite butée verticale (12) est aussi haute que les vis et positionnée au même niveau.
